# EUROPEAN PATENT APPLICATION

(11) **EP 4 403 044 A1**
(43) Date of publication of application: **24.07.2024**
(21) Application number: 22870403.7
(22) Date of filing: 16.09.2022
(51) Int. Cl.: A23L 33/135, A23L 2/38, A23L 11/50, A23L 33/16, A23L 7/104, A23L 19/00

(54) **PLANT-BASED PROBIOTIC COMPOSITION AND METHOD OF PRODUCING SAME**

(30) Priority: 17.09.2021 RU 2021127403
(71) Applicant: Probioducts Ltd., Saint-Petersburg, 194354 (RU)
(72) Inventor: DEMIN, Sergei Yurevich, Saint-Petersburg, 194021 (RU); ZHUKOV, Maxim Andreevich, Saint- Petersburg, 194354 (RU); RACKAUSKAS, Ramunas, 04130 Vilnius (LT)
(74) Representative: Hannke Bittner & Partner mbB Regensburg
(86) International application number: PCT/RU2022/050293
(87) International publication number: WO 2023/043340

(57) **Abstract**

The group of inventions relates to the field of food industry, and more specifically to probiotic foods. A method for producing a probiotic composition based on plant raw materials is provided. In the method, natural honey or a material of plant origin, which is one of cereals, beans, vegetables, fruits, a green mass of edible plants, including wild plants, and their by-products, are enriched at least once with a composition of trace elements, converted into a liquid form of hydrolysate, pasteurized, a starter culture containing strains of food microorganisms is added, fermented at a temperature which is optimal for the reproduction of microorganisms until a stationary growth phase is reached, transitioned to a fermentation step at a suboptimal reduced temperature until predetermined characteristics are achieved, and filtered from coarse bran particles at least once after hydrolysis or one of the fermentation steps. A probiotic composition based on plant raw materials produced by said method, a use of the probiotic composition for various purposes, and a probiotic product containing retentate of coarse bran particles obtained after one of the fermentation steps of said method are also provided. The technical result consists in enhancing probiotic and functional properties of the probiotic composition while increasing functionality and digestibility of food (active participation in digestion).

## Description

### Field of the invention

The group of inventions relates to the field of the food industry, and more specifically to functional food products, in particular probiotic food products. The invention is further applicable to preparing products with a high content of essential nutrients enriched with proteins, to bio-preservatives, to the field of dietetics and medicine. The invention may also be used in medical preparations and in the field of cosmetics, in an animal feed additive, and as a fertilizer.

### Prior art

In modern human diet, non-functional foods are dominant, in which the balance of nutrients is strongly biased towards the lack of some and excess of other nutritive components. In the modern world, refined foods are predominantly used, diets are inadequate, adverse environmental factors and stresses cause problems of microbiota imbalance, which is evidenced by an increasing number and variety of dietary supplements and drugs produced to stimulate the gastrointestinal tract friendly microbiota.

Currently, food industry is actively developing in the field of producing so-called "functional foods" designed to reduce the risks of various diseases or to have some additional advantages in influencing the physiology of consumers as compared to conventional products.

State Standard GOST R 52349-2005 introduces and defines the concept of "functional food" as "a special food intended for systematic consumption as part of food rations by all age groups of a healthy population, possessing scientifically substantiated and proven properties that reduce the risk of developing nutrition-related diseases, prevent or remedy the deficiency of nutrients in a human body, preserving and improving health by virtue of the presence of functional food ingredients in its composition".

Further, according to GOST R 52349-2005, a functional food ingredient (functional ingredient; physiologically functional ingredient; functional component; physiologically functional component; physiologically functional food component) is constituted by living microorganisms, a substance or a complex of substances of animal, plant, microbiological, mineral nature, or which are identical to natural, which are part of a functional food in an amount not less than 15% of the daily physiological requirement, per serving of the product, having the ability of exerting a scientifically substantiated and confirmed effect on one or several physiological functions, metabolic processes in a human body in case of systematic use of a functional food product containing said substances.

Functional food ingredients include physiologically active, valuable and safe ingredients with known physico-chemical characteristics, for which properties useful for preserving and improving health have been identified and scientifically substantiated, and a daily physiological need has been established. In particular, functional food ingredients currently include:
- soluble and insoluble food fibers (pectins, etc.);
- vitamins (vitamin E, tocotrienols, folic acid, etc.);
- minerals (calcium, magnesium, iron, selenium, etc.);
- fats and fat accompanying substances (polyunsaturated fatty acids, plant sterols, conjugated isomers of linoleic acid, structured lipids, sphingolipids, etc.);
   - polysaccharides, secondary plant compounds (flavonoids/polyphenols, carotenoids, lycopene, etc.), probiotics, prebiotics and synbiotics.

It should be noted that the definition given in State Standard GOST R 52349-2005 does not disclose the possibility of using fungal and algae food raw materials.

Functional (processed) products include:
- enriched foods to which vitamins, trace elements, and dietary fibers are added;
- products from which certain substances that are not recommended for medical reasons (trace elements, amino acids, lactose, etc.) are removed;
- products in which the removed substances are replaced by other components.

GOST R 52349-2005 also introduces and defines the concept of "probiotic food product" as "a functional food product containing, as a physiologically functional food ingredient, specially isolated strains of beneficial to humans (non-pathogenic and non-toxic) living microorganisms that have a beneficial effect on human body by normalizing the digestive tract microflora". This definition prompts that a probiotic food product is a special subclass of functional foods with one mandatory component (food strains of live microbes). The presence of functional food ingredients of non-microbial origin in this subclass of products is not specifically specified.

Substantially, functional food ingredients of probiotic foods can include any functional food ingredients from plant, animal, microbial raw materials, as well as from fungi and algae. It should be particularly noted that any products of this subclass (fermented dairy products; tea and rice fungi of microbial origin; fermented oatmeal yoghurts or fermented vegetable and plant juices) are processed functional foods due to the high fermenting, synthetic and sorption activities of food strains of microorganisms.

The properties of functional products are described in GOST R 52349-2005 in terms of supplementing foods with essential nutrients. The problem is that the metrics used in the GOST and the prior art that will be discussed below do not affect the effect of functional products on gastrointestinal tract functions which are known and important for maintaining and improving health. Both the state standard discussed above and the prior art solutions do not address both digestive (digestion, absorption, substrate binding, motor-evacuation, secretory) and non-digestive functions of the gastrointestinal tract (metabolic, barrier, excretory, reutilization of endogenous substances, detoxification, entero-endogenous recycling, regulation of microbiota, antioxidant). As such, the functions of the gastrointestinal tract critically depend on the balance of microorganisms of normoflora (microbiota), which often turns out to be biased towards pathogenic and conditionally pathogenic microorganisms in people suffering from diseases and/or disorders of the gastrointestinal tract and metabolism.

A fermented dairy skimmed bioproduct "Narilak Forte-V" produced by JSC "Vector-Bialgam" (see http://www.narilak.ru/doc/instructions.pdf) is known, which, according to the manufacturer of the product, exerts the following health-improving effects: improves the functioning of the gastrointestinal tract, prevents the proliferation of pathogenic microbes in the intestines, has a stimulating effect on immunity, promotes the absorption of vitamins and trace elements, normalizes hemoglobin levels, contributes to normalizing cholesterol levels, eliminates negative side effects of antibiotics intake, stimulates the growth of lacto- and bifidoflora in the intestines. The prior art bioproduct comprises a complex of bifido- and lactobacteria according to TU 9222-012-14392386-12 (see http://www.bialgam.ru/assets/images/123/ 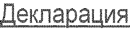 %20 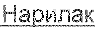 %20 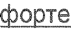 %20B%20 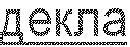 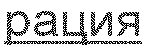 %20 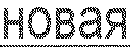 %2024.01.19.pdf).

The prior art bioproduct comprises a multi-species consortium of lacto- and bifidobacteria in a live biologically active state (1 ml of the product contains at least 1 billion lactobacteria *L. acidophilus* and at least 100 million bifidobacteria *B*. *bifidum* and *B. longum,* as well as their metabolites (B, PP, C group vitamins, volatile fatty acids, enzymes, essential amino acids)). The composition of the prior art bioproduct includes: skimmed milk, lactobacteria starter culture, live culture of bifidobacteria. The manufacturer recommends the following method of use: 2-3 times a day 20-30 minutes before meals, washed down with a small amount of liquid. Recommended dosage by the manufacturer: for an adult - 2 tablespoons; for children 1-7 years old - 1-3 teaspoons, for children 7-12 years old - 2 dessert spoons. The duration of administration is at least 14 calendar days, while a longer intake of the product is recommended. Courses of administration should be 2 times a year according to the recommendations listed on the product's website. The shelf life of an unopened bioproduct package is 3 months at a storage temperature of 4+-2 °C.

The prior art bioproduct has a number of disadvantages. In particular, it is not suitable for use by people suffering from lactose and dairy intolerance, as well as people following a strict vegan diet, since it comprises skimmed milk. It lacks prebiotic dietary fibers, which contribute to maintaining a normal level of intestinal motility and are necessary for the normal functioning of the digestive tract's own microbiota. It contains a narrow range of bacterial digestive enzymes (enzymes), which is due to the composition of the nutrient medium (milk). This medium lacks complex carbohydrates, and accordingly, there are no enzymes digesting them. In particular, when the prior art bioproduct is added to a food with starches, there would be no bacterial enzymes digesting them; besides, enzymes from the prior art bioproduct would not participate in the digestion of such food.

The prior art bioproduct does not contain polyphenols, which serve as a nutrient medium for friendly gastrointestinal microflora. Besides, the liquid medium of the bioproduct does not contain a full range of trace elements. The prior art bioproduct is apparently not resistant to repeated frosting/defrosting cycles due to precipitation of milk proteins, which causes additional difficulties during transportation and storage. Strict requirements apply to dairy raw materials for microbiological production, as well as to the bioproduct production cycle (sterile conditions due to the fact that milk-based media are not resistant to the germination of harmful microorganisms). The prior art bioproduct has a relatively high cost due to the high cost of the medium and strict requirements for the production cycle. Besides, it is characterized by a short shelf life in an unopened package (the shelf life of opened package is not indicated), and the temperature conditions of storage of the prior art bioproduct do not allow for storing it in warm conditions (at room temperature and during transportation). As a result, among significant disadvantages of the prior art bioproduct one may name that it includes animal components and has low prebiotic and functional value.

Synbiotic products are known, which comprise prebiotics and probiotics. In particular, a series of preparations of biologically active substances Vetom 1.23, 2.25, 2.26, 3.22, 4.24 contains corn extract fermented by microorganisms of genus *Bacillus,* sodium chloride, distilled water. The products differ from each other in species composition of strains aimed at inhibiting one or another pathogenic flora in the gastrointestinal tract. The product is intended for oral administration.

Among disadvantages of these prior art products one may name the absence of probiotic bacteria that would complement resident flora of the gastrointestinal tract and stimulate friendly resident microflora. Enzymatic digestive activity of the prior art products is limited, which is stipulated by the medium (corn extract) and dosages (4-10 drops per day). The cost of this type of prior art products in case of regular consumption is high. The products are not suitable for fermentation of plant raw materials and molecular cuisine.

Komarov powder from the same manufacturer is also known, which relates to synbiotics and comprises *Bacillus subtilis* bacteria, wheat bran, blue-green algae (spirulina), which are used as a source of protein, essential amino acids, omega products and minerals, as well as citric acid. The prior art product is a supplementary source of essential nutrients, dietary fibers, as well as a useful strain of the transient bacterium *Bacillus subtilis.*

Disadvantage of this prior art product is that it contains wheat bran, consumption of which may cause unpleasant and painful sensations in people with gastrointestinal mucous coat lesions. Another disadvantage of Komarov powder is that it lacks probiotic bacteria. This prior art product is not suitable for fermentation of plant raw materials and molecular cuisine.

A method for producing a biologically active food product is known, which is disclosed in patent No. RU 2558191 C1, the prior art method including drying a plant medium (oats, rice, millet with the optional addition of oat bran) in a dry-air sterilizer at 200 ° C for 5 minutes, grinding the same, fermentation with species of lactic acid bacteria (resident in the gastrointestinal tract) until pH 3.5-4.5 is reached, separation of supernatant fluid (postbiotics including lactic acid and other water-soluble substances synthesized by bacteria), and obtaining a precipitate which contains 39.78% protein in terms of a dry substance. End products are a precipitate in the form of a creamy mass (1/3 of the initial volume) and the supernatant fluid.

The resulting creamy mass may be used as a dressing for salads, vinaigrettes, as well as a flavor additive to sweet dishes. The supernatant fluid may be used as an additive to beverages or as a self-sufficient beverage like kvass.

Reference RU 2558191 C1 recites that the product has no contraindications for use, is safe, contains live lactobacteria in high concentrations, highly digestible plant protein, numerous essential amino acids, and may be recommended for dietary nutrition, in particular for dietary nutrition of patients with gastrointestinal pathology.

Among disadvantages of the product obtained by the method according to RU 2558191 C1 one may mention:
- presence of coarse bran particles in the final product, which is contraindicated in case of various gastrointestinal diseases. This restricts the use of the product for health purposes, which contradicts the safety and absence of contraindications as declared in this reference;
- drying at 200 °C destroys polyunsaturated fats and vitamins in the original plant raw materials;
- lack of trace elements necessary, in particular, for the synthesis of vitamins and metalloproteins;
- low concentration of accumulated postbiotics due to the lack of a product maturation stage;
- small amount of bioconservants (lactic acid) in the creamy product, which shortens the shelf life of the prior art product.

Postbiotic products are known (also abbreviated as postbiotics), which are prepared with plant raw materials, which contain metabolites of probiotic bacteria strains, as well as components of their membranes and enzymes of lysed cells. Recently, postbiotics have become widespread after repeated confirmation of their health-improving effect on the human body, mainly due to the high stability and long shelf life of such preparations since they do not contain live microorganisms. Among metabiotics, LACTIS preparations, MultiLys and their numerous analogues are known.

As the closest analogue of the claimed in this group of products, MultiLys (manufactured by Artlife LLC), certificate of state registration No. KZ.16.01.98.003.E.000642.07.19 dated 07/26/2019 was selected. This prior art product is a product of fermentation of pumpkin and kombucha by specialized strains of probiotic microorganisms. The product contains the following components in liquid form: fermented pumpkin and kombucha puree, prebiotics (pumpkin and kombucha polysaccharides), metabolites of *Lactobacillus casei, L. rhamnosus, L. salivarius, Bifidobacterium bifidum* bacteria and their ultralysates (peptide fragments of microorganism cell membrane), lactulose, xanthan gum, guar gum, pyridoxine hydrochloride (Vitamin B6), cyanocobalamin (vitamin B12), glucose. The field of use of this prior art product as declared by the manufacturer is as a biologically active food additive: an additional source of vitamins B6 and B12. The method of use of the prior art product as declared by the manufacturer is 1 sachet pack (5 g) per day, diluted in advance in 50 ml of drinking water, to be consumed for one month.

Among disadvantages of this prior art product, one may mention:
- its composition lacks live microorganisms, which would have a wider range of positive effects on human food and gastrointestinal tract than the combination of bacterial metabolites and ultralysate of microorganisms. As such, unlike postbiotic preparations, live probiotic bacteria are capable of flexibly adapting to the conditions of the gastrointestinal tract and the composition of food, actively participating in its digestion and detoxification, as well as in the neutralization of endotoxins. In addition, live probiotic bacteria have their own extremely high antioxidant activity in the gastrointestinal tract, which is due to their low tolerance to free oxygen;
- lack of beta-glucans;
- deficiency of polyunsaturated fat conjugates (omega 3);
- incomplete spectrum of trace elements in the composition of the fermentation medium;
- technological complexity of production process;
- high cost of a single dose.

Unlike the claimed invention, in which only plant raw materials are used for fermentation, MultiLys contains a fermentate of mixed plant and fungal raw materials (pumpkin and kombucha), supplemented with thickeners, xanthan and guar gum. A feature in common among the claimed invention and this prior art product is the inclusion (but not the scope) of prebiotics, polysaccharides, probiotic bacteria metabolytes, among which digestive enzymes, lysates of probiotic microorganisms, and vitamin composition. However, lack of active microorganisms, deficiency of trace elements, polyphenols, omega 3 products in the composition of the prior art product does enable using MultiLys and its analogues as a prototype for the claimed invention.

A prior art method for producing raw materials for functional foods from a fermented plant medium is described in Patent No. US 9161495 B2 (published 10/20/2015). In the prior art method, the plant raw materials are grains of winter varieties of barley and wheat with an optional addition of cereal bran. According to this prior art solution, vernalization is used to activate endogenous enzymes of sprouted grains, which are saccharized with endogenous alpha-amylase and maltose or additionally with external alpha-amylase and maltose, enzymes are inactivated with high temperature, optionally dried and crushed, supplemented with organic materials and/or medicinal herbs, and/or medicinal fungi, and/or vegetables and their extracts, fermented in an aqueous suspension with beneficial lactic acid bacteria (*Streptococcus sp., Pediococcus sp., Leuconostoc sp., Lactobacillus sp., Bifidobacterium sp*.) and/or food yeast (*Saccharomyces sp*.). The resulting fermented material is optionally used in a processed lyophilized form as a functional food ingredient with antioxidant and anti-diabetic activities, anti-obesity activity, which were proven in experiments on laboratory animals, used as part of functional food compositions in the form of a powder, a juice concentrate, beverage, pill, suspension, granules, emulsion, capsules and syrup. The fermented product may be optionally supplemented with sweeteners (including honey), flavors, physiologically active ingredients such as catechins (catechin, epicatechin and gallocatechin) and vitamins (retinol, ascorbic acid, tocopherol, calciferol, thiamine and riboflavin), minerals (such as calcium, magnesium, chromium, cobalt, copper, fluorides, germanium, iodine, iron, lithium, magnesium, manganese, molybdenum, phosphorus, potassium, selenium, silicon, sodium, sulfur, vanadium and zinc), preservatives, emulsifiers (such as acacia gum, carboxymethyl cellulose, xanthan gum and pectin), acidifiers and thickeners.

This prior art solution has common features with the claimed group of inventions, which consist in the use of plant raw materials, a step of saccharification of such raw materials using endogenous or, as an addition, external enzymes, a step of thermal inactivation of saccharification enzymes, a step of blending saccharized plant raw materials with extracts of medicinal herbs and fungi, fruits or vegetables, a step of fermentation in an aqueous suspension of reduced blended saccharized plant raw materials by using lactic acid bacteria.

However, among disadvantages of this prior art solution one may name:
- a lengthy minimum technological cycle for obtaining final products (according to the conditions disclosed in this prior art solution - 35-60 days) and relative complexity of the product preparation method;
- restrictions for plant raw materials to be used (only germinating grains of winter crops, mainly winter varieties of cultivated cereals such as barley and wheat, as well as rye, which meets these requirements, but is not mentioned in this reference);
- a functional food ingredient is not meant to be used in its pure form, but only as a raw material for functional food products;
- deficiency of protein monomers in the fermented medium;
- use of ingredients of animal origin;
- deficiency of biopreservatives (lactic acid);
- lack of live microorganisms in active state in the composition of the product;
- restricted consumption of the product for persons with hypersensitivity to optional additives of highly active medicines of natural origin;
- lack of trace elements in bioavailable form.

A prior art method is described in patent No. RU 2332113 C1 for a bio-oat food drinking product based on oat raw materials, characterized by a normalized content of soluble oat dietary fibers - 1,3-1,4-βD-glucan, subjected to deep processing using two-stage fermentation, and containing a normalized amount of high-molecular 1,3-1,4-βD-glucan having maximum bioavailability, to provide it with non-specific biological properties. Like the claimed group of inventions, the prior art method uses plant raw materials (oatmeal is a particular case of plant raw materials), deep fermentation of raw materials by probiotic microorganisms is carried out, and prebiotics and probiotics are also included.

However, among disadvantages of the product obtained by this prior art method, one may mention: a deficiency of polyphenols, a deficiency of postbiotics caused by a short period of post-enzymatic accumulation of postbiotics, a deficiency in trace elements content, lengthy preparation of plant raw materials for fermentation, restricted variety of plant raw materials, reduced content of microorganisms in the product during shelf life (from 1013 to 106-7), a lengthy and excessively high-tech production method, and non-substantiated declared quality criteria of the prior art product (absence of breaking) from the perspective of present-day concepts of product functionality.

Fermented hydrolyzed plant material, as well as related method and composition obtained on the basis of said material and method are known from the prior art (see patent application No. US 20180327792 A1), the prior art method consisting of three steps. The first step of the prior art method includes hydrolysis of plant raw material to obtain hydrolyzed material of plant origin. At the second step, a starting material for fermentation comprising a hydrolysate of the plant raw material is obtained. The third step includes fermenting the starting fermentation material to obtain compositions of fermented material of plant origin.

According to this prior art solution, the plant raw material is hydrolyzed while maintaining the initial dietary fiber content and beta-glucan concentration, after which it is fermented, wherein certain desirable properties of the original plant material may be retained, for example, nutrients content, whole grain condition, fiber content and beta-glucans content, and some organoleptic properties may also vary.

The potential benefit of the compositions described in this prior art solution may consist in using them as a prebiotic, a glycemic index reducer, an immunity enhancer, a source of fibers, a source of soluble fibers, a nutritional supplement, a texture modifier, a viscosity modifier, or a combination thereof.

However, this prior art solution has a number of disadvantages, which consist, in particular, in a deficiency of postbiotics due to the lack of a special step of their accumulation, a lack of metalloproteins and bacterial synthesis vitamins due to the lack of a source of trace elements at the step of fermentate enrichment, as well as in the absence of a step of raw materials coarse fraction separation.

A fermented probiotic beverage with an increased content of bioactive (functional) ingredients is known, which is described in article "Development of a Dairy-Free Fermented Oat-Based Beverage With Enhanced Probiotic and Bioactive Properties". Front. Microbiol., December 3, 2020 A fermented probiotic beverage is produced on the basis of plant raw materials (oatmeal whole grain flour) with the addition of natural honey by pre-sterilization of raw materials followed by the addition of honey dissolved in water and *Lactobacillus fermentum* strain (PC1) bacteria up to the amount of 107 (fermentation for 72 hours), with exposure at 4° C for 10-14 days to accumulate metabolites and postbiotics. After this period, the amount of microorganisms in the beverage does not decrease, and the amount of postbiotics and metabolites (phenolic acids: gallic, vanillic, caffeic, p-coumaric, ferulic, as well as polyphenols catechin and quercetin) increases by more than 50%, while glucose and fructose content decreases, antioxidants and short-chain fatty acids (acetic and lactic acid) content increases, and the content of the prebiotic beta-glucan does not change.

Honey is an extra source of antioxidants (phenolic acids and polyphenols) and monosaccharides. It was shown that after fermentation by lactic acid bacteria, bioavailability of phenolic acids of oats and barley increases up to by -20-25 times (see Hole AS, Rud I, Grimmer S, Sigl S, Narvhus J, Sahlstrøm S. Improved bioavailability of dietary phenolic acids in whole grain barley and oat groat following fermentation with probiotic Lactobacillus acidophilus, Lactobacillus johnsonii, and Lactobacillus reuteri. J Agric Food Chem. 2012 Jun 27;60(25):6369-75. doi: 10.1021/jf300410h. Epub 2012 Jun 15. PMID: 22676388. And Conway, P. L., Stern, R., and Tran, L. (2010). The value-adding potential of prebiotic components of Australian honey. Rural Industries Research and Development Corporation).

Among disadvantages of the prior art fermented probiotic beverage, one may name: deficiency of oligopeptides and amino acids, lack of metalloproteins and bioavailable microminerals, deficiency of the variety of accumulated metabolites and postbiotics due to a poorer composition of the medium. Substantially, among the disadvantages of this product there are also poor probiotic and functional properties of the product, lack of metalloproteins and minerals.

Prior art method is disclosed in the published international application No. WO 1991017672 A1, according to which a product is produced based on grain flour or vegetables and fruits, or cake and meal of plant origin with a high content of dietary fibers, which is soaked in water, then gelatinized and pasteurized, fermented with bifido and propionic bacteria, optionally in combinations with lactobacteria, optionally supplemented with berries/fruits and/or sugars, exposed at 5-8°C for 7-10 days, then packaged and stored at the same temperature.

The product obtained by this prior art method may be modified in terms of functional characteristics and taste by adding special ingredients (such as raw plant components, milk, milk powder or other milk derivatives, soy flour, starch, sugar, natural honey, berries, fruits, vegetables or jams, juices, coffee, cocoa, or food additives in the form of salt, aromatic or coloring substances, stabilizers).

This prior art product may be used separately or as a functional ingredient for any food of both plant and animal origin. The declared shelf life is up to 1 week at a temperature of 5° C. Missing this term leads to a deterioration in the taste of the product due to its souring. In this prior art solution, emphasis is placed on the presence of dietary fibers, probiotic bacteria, lactic acid in the product, as well as good taste and reduced energy value. The functional properties of the prior art product contribute to reducing blood cholesterol levels, bind bile acids, and prevent the risks of cancer diseases development (such as colon or breast cancer).

However, the prior art product disclosed in the above reference has disadvantages, including:
- presence of coarse bran particles in the final product, which are contraindicated in case of various gastrointestinal diseases, thus restricting the use of the product for health purposes,
- short declared shelf life of the product (1 to 2 weeks at 5° C),
- storage and transportation at a temperature not higher than 5° C,
- lack of oligopeptides and amino acids,
- deficiency of the variety of trace elements during fermentation,
- lack of vitamins, synthesis of which depends on the presence of trace elements in the fermentation medium.

The method and product disclosed in reference WO 1991017672 A1 may be regarded as the closest analogue (prototype) in respect of the claimed group of inventions.

### Summary of invention

### Technical problem

Taking into account the prior art discussed above, the technical problem to be resolved by the present invention consists in the need for improving the effect of functional products on known gastrointestinal functions which are important for maintaining and improving health, with an emphasis on normalizing the microflora and regulating metabolism.

The object to be achieved by the invention is to provide a broad-purpose probiotic composition with no contraindications for use, using only plant raw materials, which contain a wide variety of functional ingredients that contribute to enhancing the digestibility of food, increasing nutritional value and enriching the diet with essential nutrients, trace elements in a bioavailable form, normalizing and supporting gastrointestinal functions (including detoxification of the body), normalizing and maintaining friendly resident microbiota, improving the preservation of food and food raw materials, expanding the variety of functional bioproducts available to the population, with the possibility of local (external) and internal (oral, rectal, intranasal) administration for health purposes.

The technical result achieved by using the invention consists in enhancing probiotic and functional properties of the probiotic composition while increasing functionality and digestibility of food (active participation in digestion). In addition, the specified technical result is accompanied by such advantageous effects as normalization and maintenance of regulatory processes in the body, effective stimulation of friendly resident microbiota, exclusion of contraindications for the use of the final product, broadening the scope of use of the probiotic composition, maintaining the stability of properties of probiotic composition elements over time (i.e., a long shelf life without loss of properties and retaining the balance of elements), simplified production process of the probiotic composition.

### Solution to the problem

To resolve the above-mentioned problem and achieve said technical result, a group of inventions is provided, which are combined under a common inventive concept, comprising both probiotic compositions based on plant raw materials and methods for producing the same.

In the first aspect of the present invention, said object is achieved by a method of producing a probiotic composition based on plant raw materials, according to which natural honey or a material of plant origin, which is cereals, beans, vegetables, fruits, herbage of edible plants, including wild plants, and their by-products (crushed grain, crushed seeds, flakes, granules, flour, juices, solid/semi-liquid/liquid/dry concentrates, pastes and cake), taken separately or in the form of blends of different compositions, are enriched at least once with a composition of trace elements, converted into a liquid form of a hydrolysate with a concentration of dry matter of 0.2 to 80%, pasteurized, mesophilic and/or thermophilic starter culture containing strains of food microorganisms is added, fermented at an optimal temperature for the reproduction of microorganisms until they reach a stationary growth phase, transitioned to the fermentation step at a suboptimal reduced temperature until predetermined characteristics are achieved, filtered from coarse bran particles at least once after hydrolysis or one of the fermentation steps.

The composition of trace elements may be selected from a group comprising at least one of pink (Himalayan) salt, sea salt, seaweed powder, food ingredients or compositions containing a wide range of trace elements, or any combination thereof.

The above-mentioned mesophilic and/or thermophilic starter culture may be represented in embodiments of the invention by at least one of the strains suitable for use in food industry, from among the species of lacto/bifido/propionic acid bacteria of the following genera: *Aerococcus, Bifidobacterium, Camobacterium, Enterococcus, Lactobacillus, Lactococcus, Leuconostoc, Oenococcus, Pediococcus, Propionibacterium, Sporolactobacillus, Streptococcus, Tetragenococcus, Vagococcus, Weissella,* and representatives of other genera of lactobacteria which do not belong to species and microorganism strains that are pathogenic to humans, both separately and in any possible combination with each other.

Any step of the proposed method may comprise further addition of at least one of components selected from a group comprising: minerals, polyphenols and phenolic acids separately or in a mixture, omega 3 and 6 sources, dietary fiber, herbal extracts, natural honey, molasses, natural sugars, natural thickeners, natural antioxidants and flavors in the form of aqueous solutions, powder, granules, aqueous or oil extracts, pastes, crushed plant raw materials, plant parts, crystals, or any combination thereof.

Food alkalis and/or defoamers are optionally added at hydrolysis and fermentation steps.

In embodiments of the claimed method, conversion into a hydrolysate may be accompanied by its saccharification, or food alkalis may be used for conversion into a hydrolysate.

At the fermentation step or after filtering, the composition is optionally diluted with water, juice, saline solution, herbs and plants solution, syrups or other beverages, food oils.

The above-mentioned predetermined characteristics of the completion of the fermentation stage at a suboptimal temperature are selected from a group comprising: level of enzyme activity, composition and quantitative content of vitamins, content of monomers and/or oligomers of proteins, carbohydrates and fats, content and composition of short-chain fatty acids, exopolysaccharides, bacteriocins, polyphenols and phenolic acids, natural antioxidants, minerals in a bioavailable form, dietary fibers, amount of postbiotic and/or metabolic layer, pH level, fermentation time at a predetermined temperature, organoleptic properties, or any combination thereof.

In the second aspect, the present invention relates to a probiotic composition based on plant raw materials obtained by the method according to the above-mentioned first aspect, which is characterized by the pH level of 1.5 to 6.5, absence of coarse bran particles, content of a composition of trace elements, natural antioxidants of plant origin, polyphenols and phenolic acids of plant and bacterial origin, dietary fibers, peptides, beta-glucans, mono- and oligomers of carbohydrates and proteins, polyunsaturated fatty acids, active microorganisms, accumulated metabolites and postbiotics of microorganisms, minerals in bioavailable form, hydrolytic enzymes and detoxification enzymes, bacteriocins, exopolysaccharides, B group vitamins, short-chain fatty acids, neurotransmitters and their precursors, heme-containing proteins and other metalloproteins; and the mass fraction of dry substances of 0.2 to 80 wt. %.

In other aspects, the present invention relates to the use of the probiotic composition according to the above-mentioned second aspect as a means for health purposes intended for external and internal administration, wherein the internal administration is selected from a group comprising oral, intranasal and rectal administration, and as at least one of an animal feed additive, a human dietary supplement, a cosmetic paste or lotion, fertilizer. In embodiments of the invention, the probiotic composition is administered with dilution by saline or aqueous solutions, solutions of herbs and other natural medicinal means. The present invention also relates to a use of the probiotic composition as a functional food ingredient in at least one of solid food, beverages and ready-made sauces and beverages, as at least one of a detoxification agent, an ingredient of medicinal means, a component having effects directed against at least one of obesity, type II diabetes symptoms, proinflammatory and toxicogenic glycation of biomolecules in case of increased postprandial blood sugar levels, as a concentrate for the preparation of functional foods and/or an additional source of digestive enzymes.

In yet another aspect, the invention provides a probiotic product comprising a retentate of coarse bran particles obtained after one of the fermentation steps of the method according to the above-mentioned first aspect, configured to be used in wet and/or drained form as at least one of an animal feed additive, human dietary supplement, cosmetic paste or lotion, fertilizer.

It should be noted that the inventive concept is not restricted to the above aspects, and, based on the information characterizing the invention in the description, it will be apparent to ones skilled in the art that the invention may also take the form of different products and/or methods other than the above-mentioned ones. The scope of legal protection of the invention is only determined by the appended claims and is not restricted by any specific details provided in the following specification.

### Embodiments of the invention

Based on the prior art represented, in particular, by the prior art solutions described above, the inventors of the claimed group of inventions concluded that it is possible and necessary to supplement the metrics of functional products as described in GOST R 52349-2005 with metrics of effect on gastrointestinal functions, with an emphasis on the normalization of microflora and regulation of metabolism with functional ingredients from probiotic food products prepared on the basis of preprocessed and fermented plant raw materials.

As will be described in more detail below, the claimed group of inventions is characterized, in particular, by an increased concentration of postbiotics against the background of extremely low concentrations of monosaccharides and the absence of latent sugars, the content of a significant amount of oligomers of proteins, carbohydrates and fats, as well as oligopeptides, oligosaccharides, conjugates of polyunsaturated fatty acids (omega 3) and other essential nutrients, prebiotics and dietary fibers. The claimed composition comprises a wide range of digestive enzymes of bacterial origin, a wide variety of microminerals in a bioavailable form. Meanwhile, it does not contain coarse bran fragments, since they are filtered out during the preparation of the composition, and is characterized by long shelf life. In addition, according to the published data (Corcoran BM, Stanton C, Fitzgerald GF, Ross RP. Survival of probiotic lactobacilli in acidic environments is enhanced in the presence of metabolizable sugars. Appl Environ Microbiol. 2005 Jun;71(6):3060-7. doi: 10.1128/AEM.71.6.3060-3067.2005. PMID: 15933002; PMCID: PMC1151822.), probiotics are better preserved in an acidified fermented medium with exopolysaccharides, comparable to the compositions proposed by the applicant, and more easily survive the aggressive environment of the gastrointestinal tract.

The inventive concept is based on the idea that the normalization of microflora is not the only one advantageous characteristic of probiotic foods of any origin. Functional food ingredients that regulate metabolism in a human body and, in particular, numerous digestive and non-digestive functions of the gastrointestinal tract and liver play an equally important role.

Enhanced digestibility of food is achieved due to the digestive activity of bacterial enzymes, both accumulated in the claimed probiotic composition and newly synthesized by active microorganisms when added into food.

Enrichment of food with essential nutrients in the inventive probiotic composition is achieved by virtue of the presence of vitamins synthesized by bacteria, vitamins of the original plant raw materials, oligomers and monomers of plant proteins and carbohydrates resulting from fermentation, polyunsaturated fats from the composition of the raw materials and their bacterial conjugates (omega 3), trace elements in a bioavailable form and metalloproteins.

Normalization of digestive functions of the human gastrointestinal tract by administering the inventive probiotic composition is achieved by virtue of bacterial enzymes both accumulated in the product and newly synthesized by active microorganisms in the composition of the food. Normalization of the absorption function of the human gastrointestinal tract by administering the inventive probiotic composition is achieved by virtue of the presence of oligomers and monomers of plant proteins and carbohydrates resulting from hydrolysis and fermentation.

Normalization of the motor-evacuation function of the human gastrointestinal tract by administering the inventive probiotic composition is achieved by virtue of the presence of fermented dietary fibers in the composition of probiotic food compositions.

Normalization of the secretory function of the human gastrointestinal tract by administering the inventive probiotic composition is achieved by virtue of the presence of neurotransmitters and their precursors of bacterial origin among postbiotics in probiotic food compositions.

Normalization of the metabolic function of the human gastrointestinal tract by administering the inventive probiotic composition is achieved by virtue of the presence of detoxification enzymes of bacterial origin in the composition of probiotic food compositions.

Normalization of the barrier function of the human gastrointestinal tract by administering the inventive probiotic composition is achieved by virtue of the presence of both free exopolysaccharides and ones bound with bacterial cells in probiotic food compositions.

Normalization of the detoxification function of the human gastrointestinal tract by administering the inventive probiotic composition is achieved by virtue of the presence of bacterial detoxification enzymes, sorption of toxins and endotoxins by fermented dietary fibers and bacterial lysates (proteoglycans of bacterial membranes), as well as by virtue of the antioxidant activity of live bacteria, the presence of short-chain fatty acids, polyphenols and phenolic acids.

Normalization of the microbiota and effective maintenance of friendly gastrointestinal microflora by administering the inventive probiotic composition is achieved by virtue of the presence of exopolysaccharides (both free and associated with bacterial membranes), the presence of probiotics stimulating the resident gastrointestinal microflora and prebiotics in the product (fermented dietary fibers, beta-glucans of plant and bacterial origin, exopolysaccharides of bacteria), as well as the presence of bacteriocins that inhibit pathogenic and opportunistic pathogenic flora of the gastrointestinal tract, bacterial lysates, minerals in a bioavailable form.

Normalization of the antioxidant function of the human gastrointestinal tract by administering the inventive probiotic composition is achieved by virtue of the presence of antioxidants of natural origin in plant raw materials and bacteria, additional enrichment with plant polyphenols, and the intrinsic antioxidant activity of living microorganisms in probiotic food compositions.

An improvement in the interaction between the intestines and liver by administering the inventive probiotic composition is achieved by virtue of the presence of short-chain fatty acids of bacterial origin in the product, in particular lactic acid.

An improvement of the interaction between the intestines and the brain is achieved by virtue of the presence of neurotransmitters and their precursors of bacterial origin in the inventive probiotic composition, as well as the destruction or binding of harmful metabolites of gastrointestinal microorganisms, in particular, pro-inflammatory lipopolysaccharides of gram-negative bacteria.

Adjustment of human gastrointestinal tract functions and metabolic activity of the microbiota by administering the inventive probiotic composition is achieved by means of normalizing regulatory processes in the human body.

The complex effect of the functional ingredients of the inventive probiotic composition regulates the metabolic processes (regulatory processes) in the human body, improves the functional properties of any food and increases the shelf life of products.

The absence of coarse dietary fibers and medicinal compounds with individual contraindications excludes contraindications for the use of the claimed probiotic food compositions. The long shelf life of the inventive probiotic composition is achieved without changing the amount of microorganisms by virtue of the presence in the medium of available nutrients (such as peptides, oligopeptides, amino acids, oligosaccharides, etc.) obtained at the step of hydrolysis of plant raw materials in the method of production of probiotic composition on the basis of plant raw materials in accordance with the proposed invention.

*Method of production of probiotic composition*

First, the method of production of the probiotic composition on the basis of plant raw materials according to the first aspect of the present invention will be described. In general, the method according to the first aspect of the invention comprises:
- enriching natural honey or a material of a plant origin, which is cereals, beans, vegetables, fruits, herbage of edible plants, including wild plants, and their by-products (crushed grains, crushed seeds, flakes, granules, flour, juices, solid/semi-liquid/liquid/dry concentrates, pastes and cake), taken separately or as blends of various compositions, at least once with a composition of trace elements,
- converting into a liquid form of a hydrolysate with a dry matter concentration of 0.2 to 80%,
- pasteurizing,
- adding a mesophilic and/or thermophilic starter culture containing strains of food microorganisms,
- fermenting at an optimal temperature for the reproduction of microorganisms until they reach a stationary growth phase,
- transitioning to the fermentation step at a suboptimal reduced temperature until predetermined characteristics are achieved,
- filtering out coarse bran particles at least once after hydrolysis or one of the fermentation steps.

To produce the probiotic composition according to the invention, modes of hydrolysis by food enzymes and pasteurization are used, combined effect of which does not cause the destruction of prebiotic and bioactive components of the original plant raw materials. Food hydrolysis enzymes are used to dilute the plant raw materials which include starch and other polysaccharides, which then decompose into a mixture of oligo- and monosaccharides. This (saccharification and dilution) makes it possible to obtain a more concentrated medium which is favorable for the reproduction and active existence of probiotic bacteria.

The inventive method imposes relatively low requirements for sterility by virtue of the fact that hydrolysate of an original plant raw material containing more than 2.5% of sea or Himalayan salt prevents the reproduction of harmful microorganisms. After adding a starter to such hydrolysate, the fermentation medium becomes even less favorable for harmful microorganisms by virtue of its enrichment with bacteriocins and lactic acid from the starter culture.

Enrichment of the product with a multicomponent mineral composition according to the claimed method is carried out before producing the hydrolysate of the material of plant origin. This ensures the optimal ionic composition of the reaction mixture for enzymatic hydrolysis and eliminates the possible surplus of metal ions necessary for the effective functioning of hydrolysis enzymes.

At the first step of fermentation of the material of plant origin under stationary conditions (without maintaining the composition of the nutrient medium) in a saccharified medium and at an optimal temperature, a logarithmic increase in the amount of microorganisms occurs until the stationary phase is reached.

In the presence of fast sugars in the medium, other components available for the nutrition of microorganisms are only used for biosynthesis purposes. Transition to their use as an energy source occurs after the depletion of the pool of fast sugars.

A distinguishing feature of the claimed method of producing a probiotic composition is the second step of fermentation (at a reduced temperature, which is suboptimal for the reproduction of microorganisms). Under these conditions, consumption of low-energy compounds which are present in large amounts in the fermentation medium is sufficient both to maintain the amount of microorganisms and to accumulate beneficial metabolites and postbiotics in the fermentolysate. Reduced fermentation temperature also contributes to an increase in the duration of life of bacterial metabolites and postbiotics, in particular digestive enzymes accumulated during the step of fermentation of fast sugars. The qualitative composition of metabolites and postbiotics at the second step of fermentation is richer than at the first step of fermentation. Such enrichment is the result of stepwise hydrolysis of specific nutrient components of the fermentation medium (polysaccharides and their fragments, including oligosaccharides, peptides, oligopeptides and amino acids, oligolipids and fragments of the original fat molecules).

Thus, at the second step of fermentation, the amount of microorganisms achieved at the first step of fermentation is maintained, the amount and variety of essential nutrients, prebiotics, postbiotics and beneficial metabolites of microorganisms in the probiotic composition are increased and enriched.

In the absence of the second step of fermentation, the amount of microorganisms gradually decreases by 1-3 orders of magnitude, and the accumulated amount of essential nutrients, prebiotics, postbiotics and beneficial metabolites of bacterial origin becomes unstable both in quantitative and qualitative terms.

The present inventors found that addition of fast sugars at the second step of fermentation causes an increase in the amount of microorganisms in the medium by 1-2 orders of magnitude (up to 108 - 1014 CFU in 1 ml) while maintaining the composition of the accumulated metabolites and postbiotics that are beneficial for humans.

Said second step of fermentation at a reduced temperature is completed when the characteristics which are predetermined by the functional purpose of the particular probiotic composition are achieved. Such characteristics may be predetermined, individually or in combination, in respect of enzymatic activity, variety and quantitative content of vitamins, mono- and oligosaccharides, oligopeptides and amino acids, short-chain fatty acids, exopolysaccharides, bacteriocins, polyphenols and phenolic acids, minerals in bioavailable form.

For fermentation, the inventive method makes use of the following cultures of probiotic microorganisms, which exist in a functionally active state in the final product and can be represented by at least one of the strains suitable for use in the food industry, from among lacto/bifido/propionic acid bacteria genera: *Aerococcus, Bifidobacterium, Camobacterium, Enterococcus, Lactobacillus, Lactococcus, Leuconostoc, Oenococcus, Pediococcus, Propionibacterium, Sporolactobacillus, Streptococcus, Tetragenococcus, Vagococcus, Weissella,* as well as representatives of other genera of lactobacteria that are not pathogenic to humans, both separately and in any possible combination with each other.

The concentration of microorganisms in the ready product is predetermined within the range of 106 to 1013 CFU/ml, depending on the intended functionality of a given probiotic composition and the strains of probiotics used in the technological process. The steps of fermentation and accumulation of postbiotics are carried out at a predetermined temperature (respectively, optimal and suboptimal for specific strains of microorganisms) until they reach a stationary growth phase.

The microorganisms used and acceptable for use in the composition can sustain their vital activity within the temperature range of 0 to 50°C. Transportation at higher temperatures potentially reduces the shelf life of the composition, but does not affect the beneficial properties of the product. At higher temperatures, the concentration of metabolites and postbiotics of probiotic bacteria in the composition increases intensively, and the amount of food (mainly dietary fibers of plant origin) decreases proportionally. At slightly negative temperatures (-1 °C), the product does not freeze.

As indirect signs determining the achievement of the required characteristics of the composition and the completion of the fermentation step, the pH level, the amount of postbiotic and/or metabolic layer, organoleptic properties, including odor, a known time to achieve such characteristics at the temperature used during the second step of fermentation may be used.

In some embodiments of the invention, the optional addition of food alkalis at the fermentation step that is carried out at an optimal or reduced temperature reduces the concentration of lactic acid, which stimulates further growth in the amount of microorganisms, causes bioconservants (such as sodium and/ or potassium lactates) to appear, and also changes the organoleptic properties of the product.

When the product is enriched with fat-based additives (in particular, olive oil, fish oil, etc.), emulsification and conjugation of polyunsaturated fatty acids (omega 3 and 6) in the product composition takes place due to lactic acid.

In accordance with the claimed method, plant raw materials are grains of cereals, beans, vegetables, fruits, herbage of edible plants, including wild plants, taken separately or as blends of different compositions. The variety of raw materials enables the selection of an environment with a predetermined optional enrichment with certain functional ingredients, which enables adapting the production to locally available plant raw materials.

### Examples

Next, the inventive method will be illustrated by specific examples of implementation of the invention, which are only intended for confirming the possibility of implementing the intended use of the claimed invention and achieving the specified technical result, but not for restricting the scope of legal protection of the present invention to any specific details.

### Example 1: A concentrate of a probiotic composition based on an oatmeal medium with minerals and polyphenols (peppermint).

In this example, the inventive method is carried out to obtain a probiotic composition in the form of a concentrate based on an oatmeal medium with minerals and polyphenols. The process according to the method is carried out in the form of the following sequence of steps:
1. Dry oat flakes are soaked in a stirring mode in water at a temperature of 76°C in a proportion of 600 g of flakes per 1 liter of oat suspension.
2. A composition of macro- and trace elements - pink Himalayan salt - is added to reach a final concentration of 2.2 wt%.
3. Hydrolytic enzyme Amylosubtilin is added in a proportion of 0.75 g per 1 kg of dry oat flakes.
4. Watered oats with additives are hydrolyzed in a grinding mode at 76°C for 15 minutes until a homogeneous suspension with a semi-liquid consistency is formed, which does not change to liquid within the last 3-5 minutes of hydrolysis.
5. Semi-liquid oatmeal suspension is cooled in the stirring mode to 58°C.
6. Hydrolytic enzyme Protosubtilin is added in a proportion of of 3 g per 1 kg of dry oat flakes.
7. The semi-liquid suspension with additives is hydrolyzed in the grinding mode at 58°C for 30 minutes until a finely dispersed liquid suspension is formed, consistency of which does not significantly change within the last 5-10 minutes of hydrolysis.
8. The hydrolysate is pasteurized in a stirring mode for 10 minutes at a temperature of 92°C, which simultaneously leads to inactivation of external hydrolysis enzymes.
9. A composition of polyphenols is added (a product of hot aqueous extraction of crushed dry peppermint, in a proportion of 10 g of mint per 1 liter of extract) in an amount of 50 ml of extract per 1 liter of pasteurized hydrolysate.
10. The hydrolysate is cooled to 42°C.
11. Mesophilic starter culture is added (any non-pathogenic strains selected from a group comprising *Lactobacillus acidophilus, L. casei, L. pediococcus, L. plantarum, L.rhamnosus, L. bulgaricus, L. helveticus, L. salivarius, L. fermentum, L. reuteri, Lactococcus lactis, Bifidum bifidum, B. breve, B. longum, B. infantis, Streptococcus thermophilus* separately or in any combination).
12. The suspension is fermented in a stirring mode for 10-15 hours at a constant temperature of 35-40°C until pH 3.8-4.8 is reached.
13. Coarse bran particles are filtered out using sieves with 80-100 mesh cells.
14. Fermenting is carried out at 12°C until a predetermined amount of metabolites and postbiotics is reached.

The resulting probiotic composition is characterized by an extremely low content of monosaccharides (<0.9 wt.% according to GOST R 54607.6-2015) and comprises the following bioactive components:
- probiotic microorganisms at a concentration of 10 9-1014 CFU/ml with high intrinsic antioxidant activity (the content is estimated, for example, according to GOST 10444.11-2013, procedural guidelines MUK 4.2.577-96, methods described in Aline Moser, Hélène Berthoud, Elisabeth Eugster, Leo Meile, Stefan Irmler, Detection and enumeration of Lactobacillus helveticus in dairy products, International Dairy Journal, Volume 68, 2017, Pages 52-59, ISSN 0958-6946, https://doi.org/10.1016/j.idairyj.2016.12.007, The spiral plate count (SPLC) method, and other methods that determine the amount of microorganisms);
- digestive enzymes of lactic acid bacteria (proteolytic activity (the content is estimated, for example, according to GOST 34430-2018, as well as according to the methods described in references CHOW, B. F., & PETICOLAS, M. A. (1948). A rapid method for the determination of proteolytic activities of enzyme preparations. The Journal of general physiology, 32(1), 17-24. https://doi.org/10.1085/jgp.32.1.17; S CASTRO and A M B CANTERA, A rapid and inexpensive procedure for the determination of proteolytic activity - 1995 - Biochemical Education - Wiley Online Library https://iubmb.onlinelibrary.wiley.com/doi/pdf/10.1016/0307-4412%2894%2900104-W);
- short-chain fatty acids (the content is determined, for example, by gas chromatography);
- prebiotics (dietary fibers of oats and probiotic bacteria) (the content of soluble and insoluble dietary fibers is determined, for example, using enzymatic gravimetric method according to GOST R 54014-2010 or the method described in reference Li BW. Determination of total dietary fiber in foods and food products by using a single-enzyme, enzymatic-gravimetric method: interlaboratory study. J AOAC Int. 1995 Nov-Dec;78(6):1440-4. PMID: 8664579);
- bacteriocins (the content is determined, for example, using the method described in reference Catherine B. Lewus, Thomas J. Montville, Detection of bacteriocins produced by lactic acid bacteria, Journal of Microbiological Methods, Volume 13, Issue 2, 1991, Pages 145-150, ISSN 0167-7012, https://doi.org/10.1016/0167-7012(91)90014-H.);
- exopolysaccharides of probiotic bacteria (the content is determined, for example, using the method described in Rühmann B, Schmid J, Sieber V. Methods to identify the unexplored diversity of microbial exopolysaccharides. Front Microbiol. 2015 Jun 9;6:565. doi: 10.3389/fmicb.2015.00565. PMID: 26106372; PMCID: PMC4460557);
- conjugates of polyunsaturated fatty acids (omega 3 in bioavailable form);
- microminerals in bioavailable form (for example, the presence of selenium proteins and selenium cysteine as a bioavailable form of micromineral);
- antioxidants of oats and probiotic bacteria (polyphenols and phenolic acids) (determination by spectrophotometric method);
- essential nutrients (free amino acids, oligopeptides, short lipids, B vitamins, etc.);
- intestinal sorbents of oats and lactic acid bacteria;
- neurotransmitters and their precursors of bacterial origin (serotonin, gamma-aminobutyric acid, etc.) (determination based on the methods disclosed in the article Briguglio M, Dell'Osso B, Panzica G, Malgaroli A, Banfi G, Zanaboni Dina C, Galentino R, Porta M. Dietary Neurotransmitters: A Narrative Review on Current Knowledge. Nutrients. 2018 May 10;10(5):591. doi: 10.3390/nu10050591. PMID: 29748506; PMCID: PMC5986471).

The probiotic composition obtained in this example may be used as a probiotic food concentrate, beverage concentrate, functional food additive, animal feed additive, fertilizer.

### Example 2: A concentrate of a probiotic composition based on buckwheat medium treated with food alkali and supplemented with minerals, enriched with omega 3 (olive oil) and polyphenols (peppermint)

In this example, the inventive method is implemented to produce a probiotic composition in the form of a concentrate based on buckwheat medium treated with food alkali and supplemented with minerals. The process according to the method is carried out in the form of the following sequence of steps:
1. Buckwheat groats are soaked in water at a temperature of 60°C in a proportion of 500 g per 1 liter of buckwheat suspension for 30 minutes.
2. Grinding and mixing are performed until a homogeneous suspension with a semi-liquid consistency is provided.
3. A composition of macro- and trace elements - pink Himalayan salt - is added in the stirring mode to reach a final concentration of 1.0 wt. %.
4. Food alkali is added in the same mode in a proportion of 15-20 g per 1 liter of suspension.
5. Olive oil is added as a defoamer and source of omega 3 in a proportion of 50 ml per 1 liter of suspension.
6. A semi-liquid suspension with additives is hydrolyzed for 30 minutes in the grinding mode with a gradual increase in temperature to 92°C until a finely dispersed liquid suspension is formed, consistency of which does not significantly change within the last 5-10 minutes of hydrolysis.
7. The hydrolysate is pasteurized in the stirring mode for 10 minutes at a temperature of 92°C.
8. A composition of polyphenols is added (which is a product of hot aqueous extraction of crushed dry peppermint, in a proportion of 10 g of mint per 1 liter of extract) in the amount of 50 ml of extract per 1 liter of pasteurized hydrolysate.
9. The hydrolysate is cooled to 37°C.
10. A mesophilic starter culture of lactic acid bacteria (*Lactobacillus acidophilus* and *Streptococcus thermophilus strains*) is added.
11. The suspension is fermented in a stirring mode for 15-17 hours at a constant temperature of 37°C.
12. Coarse bran particles are filtered out using sieves with 80-100 mesh cells.
13. Fermenting is performed at 12°C until pH 4.0-4.8 and a predetermined amount of metabolites and postbiotics are reached.

The probiotic composition obtained in this example may be used as a probiotic food concentrate, beverage concentrate, functional food additive.

### Example 3: A concentrate of a probiotic composition based on a medium of wild plants with minerals

In this example, the inventive method is implemented to produce a probiotic composition in the form of a concentrate based on a medium of wild plants (herbage of aise-weed and dandelion root) with minerals. The process according to the method is carried out in the form of the following sequence of steps:
1. An aqueous suspension of a mixture of frozen (or raw) wild plants (herbage of aise-weed and dandelion root in a weight proportion of 3 to 1) or powders prepared from the same and taken in the same proportion, is obtained in the grinding or stirring mode, in a proportion of 600 g of moist wild plants per 1 liter of aqueous suspension or 150 g of a mixture of powders per 1 liter of suspension.
2. A composition enriched with trace elements of an aqueous extract of crushed fucus powder (a product of hot aqueous extraction of powder from crushed fucus, in a proportion of 30 g of fucus per 1 liter of extract) is added to reach a final concentration of 0.9 wt%.
3. In the grinding or stirring mode, the mixture is heated to 59°C.
4. A mixture of hydrolytic enzymes (amylosubtilin and cellulux) is added in the stirring mode in a proportion of 1 to 1 in a proportion of 2 g of the enzyme mixture per 1 kg of powder or 1 kg of dry weight of the mixture of wild plants.
5. Hydrolysis is carried out for 30 minutes at 58°C until a homogeneous suspension with a stable semi-liquid consistency is provided.
6. The hydrolysate is heated in the stirring mode to 65°C.
7. The proteolytic enzyme papain is added in a proportion of 5 g of the enzyme per 1 kg of powder or dry weight of the mixture of wild plants.
8. The suspension is hydrolyzed in the stirring mode at 65°C for 15 minutes until a homogeneous suspension of liquid consistency is provided.
9. The hydrolysate is pasteurized in the stirring mode for 10 minutes at a temperature of 92°C, which simultaneously inactivates all external hydrolysis enzymes.
10. The hydrolysate is cooled in the same mode to 45-50°C.
11. Thermophilic starter culture is added (*Streptococcus salivarius ssp strains. thermophilus, Lactococcus lactis ssp. cremoris, Lactococcus lactis ssp. lactis, Lactobacillus casei, Leuconostoc mesenteroides ssp. mesenteroides* separately or in any combination).
12. Fermenting is carried out in the stirring mode for 15-18 hours at a constant temperature of 45-50°C until pH 4.0-4.8 is reached.
13. Coarse bran particles are filtered out using sieves with 80-100 mesh cells.
14. Food alkali (Na or K bicarbonate, or a mixture thereof in a proportion of 1 to 1) is added into the fermentate in the stirring mode in a proportion of 15 g per 1 liter of suspension.
15. Olive oil is added as a defoamer and a source of omega 3 conjugates.
16. Fermenting is carried out at 20°C until pH 4.0-4.8 and a predetermined amount of metabolites and postbiotics are reached.

The probiotic composition obtained by the method of this example includes, aside from bioactive substances of bacterial origin, healthy components of wild plants and fucus brown algae;
- prebiotics (dietary fibers from wild plants);
- natural thickeners (inulin from dandelion roots, agar-agar from fucus);
- polyphenols and phenolic acids (wild plants, fucus);
- vitamins and trace elements in bioavailable form (wild plants, fucus);
- essential nutrients (wild plants, fucus).

The probiotic composition obtained in this example may be used as a probiotic food concentrate, beverage concentrate, functional food additive, animal feed additive.

### Example 4: A concentrate of probiotic honey beverage with the addition of a prebiotic (dietary fibers)

In this example, the inventive method is carried out to produce a probiotic composition in the form of a concentrate of a probiotic honey beverage with the addition of a prebiotic (dietary fibers). The process according to the method is carried out in the form of the following sequence of steps:
1. In the stirring mode, natural honey is dissolved in water at 55°C in a proportion of 600 g of honey in 1 liter of water.
2. A composition of macro- and trace elements - pink Himalayan salt - is added to reach a final concentration of 3.4 wt%.
3. The solution is cooled to 42°C.
4. A concentrated solution of red grape polyphenols in the amount of 10 ml per 1 liter of suspension is added in the stirring mode.
5. Mesophilic starter culture is added (strains *Lactobacillus acidophilus, L. casei, L. pediococcus, L. plantarum, L.rhamnosus, L. bulgaricus, L. helveticus, L. salivarius, L. fermentum, Bifidobacterium bifidum, B. breve, B. Longum, B. infantis, Lactococcus lactis, Streptococcus thermophilus* separately or in any combination).
6. The suspension is fermented in the stirring mode for 10-15 hours at a constant temperature of 35-40°C until pH 4.0-4.8 is reached.
7. Jerusalem artichoke powder is added as a prebiotic and thickener in a proportion of 4 g per 1 liter of suspension.
8. Fermenting is performed at 12°C until a predetermined amount of metabolites and postbiotics is reached.

### Example 5: A concentrate of a probiotic composition based on a rice medium with the addition of minerals, green tea extract, and natural honey

In this example, the inventive method is implemented to produce a probiotic composition in the form of a concentrate based on a rice medium with the addition of minerals, green tea extract, and natural honey, supplemented with turmeric (or ginger root extract). The process according to the method is carried out in the form of the following sequence of steps:
1. Steamed rice grains are soaked in water in the stirring mode at a temperature of 76°C in a proportion of 210 g of rice per 1 liter of suspension.
2. A composition of macro- and trace elements - pink Himalayan salt - is added to reach a final concentration of 1.1 wt%.
3. Hydrolytic enzyme Amylosubtilin is added in a proportion of 0.75 grams per 1 kg of dry grains.
4. Moist rice is hydrolyzed in the grinding mode at 76°C for 15 minutes, until a homogeneous suspension with a semi-liquid consistency is formed.
5. Cooling to 58°C is performed in the stirring mode.
6. Proteolytic enzyme bromelain is added in the same mode in a proportion of 5 g per 1 kg of dry grains.
7. The semi-liquid suspension is hydrolyzed at 58°C for 30 minutes in the grinding mode until a finely dispersed liquid suspension is provided.
8. The hydrolysate is pasteurized in the stirring mode for 10 minutes at a temperature of 92°C, which simultaneously leads to inactivation of external hydrolysis enzymes.
9. Cooling to 55°C is performed in the same mode.
10. An aqueous extract of green tea polyphenols is added (extraction of 10 g of green tea with 1 liter of boiling water) in a proportion of 50 ml of tea extract per 1 liter of pasteurized hydrolysate.
11. In the stirring mode, natural honey is dissolved in the hydrolysate at 55°C in a proportion of 600 g of honey per 1 liter of water.
12. The hydrolysate is cooled to 42°C.
13. Mesophilic starter culture is added (strains *Lactobacillus acidophilus, L. casei, L. pediococcus, L. plantarum, L. rhamnosus, L. bulgaricus, L. helveticus, L. salivarius, L. fermentum, Bifidobacterium bifidum, B. breve, B. Longum, B. infantis, Lactococcus lactis, Streptococcus thermophilus* separately or in any combination).
14. The suspension is fermented in the stirring mode for 10-15 hours at a constant temperature of 35-40°C until pH 4.0-4.8 is reached.
15. Coarse bran particles are filtered out using sieves with 80-100 mesh cells.
16. Fermenting is carried out at 12°C until a predetermined amount of metabolites and postbiotics is reached.
17. Turmeric powder is added in the stirring mode in a proportion of 2 g per 1 liter of fermentate or chilled aqueous extract of ginger root (extraction of 50 g of crushed root in 1 liter of boiling water) in a proportion of 50 ml of extract per 1 liter of the fermentate.

### Example 6: A probiotic composition with an increased content of microorganisms, postbiotics and metabolites of bacterial origin

This example of implementation of the inventive method is substantially a modified version of the method as described above in Example 1, and enables the production of a probiotic composition with extra increased content of microorganisms, postbiotics and metabolites of bacterial origin. The process according to the method substantially corresponds to the process described above in Example 1. However, it is supplemented by the fact that, in the probiotic composition produced by the method described in Example 1, at the fermentation step at 12°C, food alkali is added in an amount of 18 g per 1 liter of the enzyme.

The result of this additional step is an increase in the amount of microorganisms in the resulting product by 1-2 orders of magnitude.

### Example 7: A probiotic composition with propionic acid bacteria and propionic acid

This example of implementation of the inventive method is substantially a modified version of the method described above in any of Examples 1-5, and enables the production of a probiotic composition supplemented with propionic acid bacteria and propionic acid. The process according to the method substantially corresponds to the process described above in any of the Examples 1-5. However, it is supplemented by the fact that a starter culture containing *Propionibacterium acidipropionici, P. freudenreichii, P. jensenii, P. microaerophilum* strains is added, separately or in any combination, to the hydrolysate prepared in the respective step of the method described in any of the above Examples 1-5, after which the two-step fermentation is carried out.

This makes enables supplementing the resulting probiotic composition with propionic acid bacteria and their metabolite propionic acid. Propionic acid and propionate have the following functions: energy supply for the epithelium, antibacterial effect, regulation of epithelial proliferation and differentiation, supply of gluconeogenesis substrates, blocking adhesion of pathogens to the epithelium, support of ion exchange (see, for example, Ardatskaya M.D., Minushkin O.N. Sovremennye printsipy diagnostiki i farmakologicheskoy korrektsii (Modern principles of diagnosis and pharmacological correction) // Gastroenterology, appendix to the journal Consilium Medicum. - 2006. - Vol. 8. - No. 2. Pp. 4-17., Hosseini E, Grootaert C, Verstraete W, Van de Wiele T. Propionate as a health-promoting microbial metabolite in the human gut. Nutr Rev. 2011 May;69(5):245-58. doi: 10.1111/j.1753-4887.2011.00388.x. PMID: 21521227). Propionic acid is also involved in the synthesis of hormones, neurotransmitters (serotonin, endorphins) and has an antifungal effect and increases physical endurance of the body (Jonathan Scheiman, Sarah Lessard, Aleksandar D. Kostic, et al. Meta-omics analysis of elite athletes identifies a performance-enhancing microbe that functions via lactate metabolism. Nature Medicine, 2019).

These factors enhance the functionality of the resulting product.

### Example 8: Preparation of an oatmeal probiotic beverage with an aqueous extract of peppermint

This example of implementation of the inventive method is substantially a modified version of the method described above in Example 1, and enables the production of a probiotic composition in the form of an oatmeal probiotic beverage with an aqueous extract of peppermint. The process according to the method substantially corresponds to the process described above in Example 1. However, it is supplemented by the fact that the concentrate of the probiotic composition produced by the method as described in Example 1 is diluted with water in a volume ratio of 6 to 1. After that, freshly prepared aqueous extract of peppermint powder is added in the amount of 50 ml of extract per 1 liter of the beverage.

In one or more embodiments of the invention, the use of aqueous extracts of peppermint, which have antispasmodic, analgesic, anti-inflammatory, antispasmodic, and decongestant properties, which is known from biomedical research (see, in particular, Almeida RN, Hiruma CA, Barbosa-Filho JM: Analgesic effect of rotundefolone in rodents. Fitoterapia 1996, 67:334-338.; Della Loggia R, Tubaro A, Lunder T: Evaluation of some pharmacological activities of a peppermint extract. Fitoterapia 1990, 61:15-221; Raya MD, Utrilla MP, Navarro MC, Jimenez J: CNS activity of Mentha rotundifolia and Mentha longifolia essential oil in mice and rats. Phytother Res 1990, 4:232-234; Mimica-Dukić N, Božin B, Soković M, Mihajlović B, Matavulj M: Antimicrobial and antioxidant activities of three Mentha species essential oils. PlantaMed 2003, 69:413-419). Besides, aqueous extracts of peppermint are also a natural source of polyphenols and antioxidants.

### Example 9: Probiotic compositions with medicinal herbs

This example of implementation of the inventive method is substantially a modified version of the method described above in any of the Examples 1-5, and enables the production of a probiotic composition supplemented with medicinal herbs. The process according to the method substantially corresponds to the process described above in any of the Examples 1-5. However, it is supplemented by the fact that extracts of medicinal herbs are added to the probiotic composition produced by the method of any of Examples 1-5 after the fermentation step, such as, by way of a non-limiting example, aqueous chamomile extract (in the amount of crushed chamomile flowers in a proportion of 100 g of chamomile per 1 liter of hot aqueous extraction) in an amount of 50 ml extract per 1 liter of product. This additionally exerts an anti-inflammatory, antispasmodic, regenerating and sedative effect of the probiotic composition on humans.

### Example 10: A probiotic composition in the form of a paste

This example of implementation of the inventive method is substantially a modified version of the method as described above in Example 3, and enables the production of a probiotic composition in the form of a paste. The process according to the method substantially corresponds to the process described above in Example 3. However, it is supplemented by the fact that a powder of Jerusalem artichoke root is added to the probiotic composition produced in accordance with Example 3 until a paste-like consistency is achieved, which increases the prebiotic component of the product, since Jerusalem artichoke root contains a lot of inulin. The functional focus of such a product is for people with type 2 diabetes, obesity, and dysbiosis.

### Example 11: A hypoallergenic probiotic composition

This example of implementation of the inventive method is substantially a modified version of the method as described above in any of the Examples 1-5, and enables the production of a hypoallergenic probiotic composition. The process according to the method substantially corresponds to the process described above in any of the Examples 1-5. However, it is supplemented by the fact that a starter culture containing the strain Lactobacillus acidophilus EP 317/402 (Narine) is added to the hydrolysate prepared as part of the implementation of the method in accordance with any of the Examples 1-5, and the first step of fermentation is carried out at 37°C, the second step of fermentation is carried out at 10-15°C.

### Example 12: A probiotic composition with an increased mineral content

This example of implementation of the inventive method is substantially a modified version of the method described above in Example 1, and enables the production of a probiotic composition in the form of a concentrate with an increased mineral content. The process according to the method substantially corresponds to the process described above in Example 1. However, it is supplemented by the fact that a 30% aqueous solution of macro- and trace elements (pink Himalayan salt) is added to the probiotic composition produced in accordance with Example 1 to achieve a final concentration of 4.0 wt%. Pink (Himalayan) and sea salt are intended to further improve the organoleptic properties of the probiotic composition according to the invention.

It should be noted that the examples of the production of probiotic compositions by the inventive method as described above only represent some of the possible embodiments of the inventive method. Specific steps of the method described in various examples and the modes of their implementation may be used in other embodiments of the inventive method, thus forming a wide variety of other possible specific embodiments of the invention, although their description is not explicitly provided. The examples are only provided for explaining possible implementations and demonstrating the variability of technological processes within the framework of the inventive concept, as well as confirming the possibility of implementing the intended use of the invention and achieving the technical result.

The choice of a specific method for producing the probiotic composition according to the invention and its specific composition are determined by nutritionists or food technologists, taking into account the required functionality of the product, production capacities, availability of plant raw materials and available or intentionally used probiotic strains of microorganisms, examples of which are provided above.

### Probiotic composition

In the second aspect, the invention relates to a probiotic composition based on plant raw materials obtained by the method according to the first aspect of the invention as described above. The probiotic composition according to the invention is generally characterized by the following:
- pH level of 1.5 to 5.8,
- absence of coarse bran particles,
- contents:
   natural antioxidants of plant origin,
   polyphenols and phenolic acids of plant and bacterial origin,
   dietary fibers,
   peptides,
   beta-glucans,
   mono- and oligomers of carbohydrates and proteins,
   polyunsaturated fatty acids,
   active microorganisms,
   accumulated metabolites and postbiotics of microorganisms,
   minerals in bioavailable form,
   hydrolytic enzymes and detoxification enzymes,
   bacteriocins,
   exopolysaccharides,
   B group vitamins,
   short-chain fatty acids,
   neurotransmitters and their precursors,
   heme-containing proteins and other metalloproteins; and
- the mass fraction of dry substances of 0.2 to 80 wt. %.

The following is a brief description and explanation of the functions of some key components of the probiotic composition that are part of the resulting product and/or are obtained during the implementation of the above-described method of production of the probiotic composition according to the invention.

Fermentolysate is a fermented plant medium obtained during the implementation of the method of production of the probiotic composition, which is characterized by high content of peptides and amino acids. The fermentolysate contributes to maintaining the necessary amount of microorganisms in the inventive probiotic composition at the stage of its storage.

The high variability of plant raw materials and their extracts used in the production of probiotic compositions (pomegranate, turmeric, peppermint, red grapes, green tea, pepper and other spices, various berries) ensures a high variability of contents of the resulting composition in terms of polyphenols and phenolic acids. The polyphenols contained in the probiotic composition obtained by the proposed method are antioxidants, which have a positive effect on the shelf life of the composition.

By virtue of the enzymatic activity of microorganisms as described above, polyphenols in the probiotic composition produced by the proposed method may be modified, which expands the variety of polyphenols in the gastrointestinal tract. Polyphenols and phenolic acids are common components of hydrolyzed products of plant origin, as well as metabolites of probiotic microorganisms obtained on the basis of media containing materials of plant origin. They are effective antioxidants and improve the organoleptic properties of the probiotic composition.

Postbiotics and metabolites of probiotic bacteria in the composition are represented by biomolecules which are beneficial for humans: short-chain fatty acids, essential nutrients, including vitamins and minerals in bioavailable form, exopolysaccharides, digestive enzymes, neurotransmitters and their precursors, bacteriocins, detoxifiers and detoxification activators for various types of human cells and organs, food fibrils, including bacterial beta-glucans, factors of growth and protection of human cells and friendly resident intestinal microflora, anti-inflammatory agents and other chemical compounds that contribute to the normalization of metabolism in the human body.

The postbiotics in the composition are accumulated during its maturation at a suboptimal reduced temperature and during its storage period at a temperature of 2-8°C. Postbiotics include both thermally stable (in the range from 0 to 50°C) products of bacterial synthesis with a long life span, and products of bacterial synthesis with reduced thermal stability and/or with a medium and short life span. The concentration of short-lived and/or non-thermostable postbiotics in the composition may be kept constant at a low temperature due to the continuous metabolic activity of microorganisms. Meanwhile, the amount of thermostable postbiotics increases during the periods of maturation and storage of the product at low temperatures.

Positive dynamics of postbiotics content in the product are a feature that distinguishes the probiotic composition from prior art postbiotic preparations (metabiotics), in which the content of thermostable biomolecules is a relatively constant value, and the content of non-thermostable and/or short-lived biomolecules decreases rapidly during the shelf life.

Lactobacteria are known for their ability to convert trace elements into a form which is accessible for human cells. As an example, one may mention the bacterial transformation of selenium ions into nanoparticles or selenated amino acids, which provides a quick and effective remedy for the deficiency of this vital trace element and thereby a prophylaxis for cancer, aging, and different chronic diseases associated with a deficiency of bioavailable selenium.

The functionality of food supplemented with the inventive probiotic composition is enhanced by bacterial protein (enzymes and peptides secreted by bacteria, as well as proteins in bacteria that make up for at least 1/4 - 1/3 of their dry weight). Unlike the spare proteins of many plants, bacterial proteins are well balanced in terms of amino acid composition. Such protein contains sufficient amounts of all essential and conditionally essential amino acids for humans.

Bacteria in the proposed probiotic composition may be destroyed due to natural death, under the effect of peroxides excreted by them (for example, hydrogen peroxide), lysozyme enzyme and third-party bacteriocins from other species of bacteria. As such, the initial contents of the probiotic composition are enriched with beneficial products of bacterial lysis (lytic enzymes, cell membrane components, total protein and peptides, oligosaccharides, etc.).

Bacteriocins synthesized by probiotic bacteria are accumulated as part of the probiotic composition produced by the method according to the invention. These agents disinfect and thereby prevent spoilage of the product obtained by this method, while acting as biopreservatives. Bacteriocins normalize the resident microbiota of the large intestine by inhibiting pathogenic and opportunistic microorganisms. Probiotic bacteria of the composition obtained by the proposed method and their components (fragments of the cell membrane) which enter the large intestine are stimulating factors for the growth and development of normoflora.

In the original plant raw materials used for producing the probiotic composition by the method according to the invention, a deficiency in some trace elements is possible. Trace elements are necessary for the effective bacterial synthesis of certain vitamins and metalloproteins. In particular, the synthesis of vitamin B12 requires the presence of cobalt ions. The wider the range of trace elements in the medium, the higher the level of synthesis of vitamins and metalloproteins by probiotic bacteria as part of the probiotic composition and the normoflora of the human gastrointestinal tract. To compensate for the potential deficiency of trace elements in the resulting product, the method comprises enriching, at least once, with a composition of trace elements, which may be represented either by pink (Himalayan) salt, or sea salt, or seaweed powder, or other food ingredients or compositions containing a wide variety of trace elements.

Micronutrient enrichment may be carried out by means of food ingredients or compositions - natural sources of various types of trace elements, such as, for example, Mumiyo, extracts of shelf fungus and reishi mushroom, apricot or nut seeds, some wild plants such as licorice root, rhubarb, dandelion or licorice, as well as pharmaceutical preparations with trace element additives (such as linseed oil with selenium) and fermented bean seeds (such as miso paste) separately or in a combination.

The composition and quantitative content of trace elements in the recommended daily dose of the probiotic composition according to the invention does not exceed half of the daily human need for them. The maximum permissible concentrations are determined for different categories of the population in relation to such sources of minerals as pink (Himalayan) and sea salt, as well as for fucus powder and other algae used in food. This makes it easy to calculate the maximum permissible daily intake of the inventive composition for different age and sex groups of humans in terms of trace elements, both for relatively healthy people and for people suffering from diseases which require adjustment of the daily intake of certain minerals.

The presence of trace elements in the probiotic composition obtained by the method according to the invention enhances the functionality of food consumed together with it, regardless of the diet.

An important role in the inventive composition belongs to short-chain fatty acids, which are metabolites of probiotic microorganisms fermenting saccharized media. According to the claimed method, the saccharification of materials of plant origin takes place at the step of hydrolysis. Subsequent fermentation by bacteria is carried out to achieve the maximum possible level of desaccharification. Further increase in the concentration of short-chain fatty acids is optionally made possible by additional enrichment of the raw materials with saccharized mixtures. Excess lactic acid inhibits the reproduction of bacteria, which may be avoided by adding food alkali (Na or K bicarbonate, or a mixture of them in a proportion of 1 to 1) into the fermentation medium. Short-chain fatty acids are detoxification agents, bacteriostatics and nutrients involved in lipid metabolism.

The materials of plant origin used to produce the fermentation medium contain both water-soluble and non-water-soluble dietary fibers (poly- and oligosaccharides), which are prebiotics available as food for the resident microbiota.

By virtue of bacterial fermentation, the dietary fibers of the original raw material are fragmented into shorter sequences. This enhances the variety of dietary prebiotics due to the variety of food preferences of beneficial bacteria of the human normoflora, which completely eliminates the risks of damage to the protective mucous layer of the intestines.

Dietary fibers of different composition and origins are characterized by selective sorption of various types of toxicants. This enables efficient sorption of various types of toxicants, both in food and in the gastrointestinal tract.

One of the mechanisms of body cleansing is the process of physiological filtration and reabsorption of liquid from the vascular bed into the intestinal lumen by its villi. By contacting with sorbents from the probiotic composition (dietary fibers, bacterial membranes) and being exposed to bacterial detoxification enzymes, harmful substances are eliminated from the body. Thus, the composition is an effective remedy for poisoning, toxicosis of various etiologies, including endotoxicosis. The sorption properties of the composition improve the condition of the human body in case of dysbiosis.

Polyphenols in the composition serve as antioxidants, and this has a positive effect on the preservation of organoleptic and functional properties of the composition. In their turn, bacteriocins block the reproduction of foreign microorganisms in the composition. These factors ensure a long shelf life of the composition. The applicants have experimentally established that the shelf life of the composition is no less than one year if stored at the temperature of 2-8°C.

Plant raw materials for the manufacture of probiotic compositions are cereals, beans, vegetables, fruits, green mass of edible plants, including wild plants, taken separately or in the form of blends of different compositions.

The original plant raw materials may be supplemented by dietary fibers and natural thickeners (inulin or inulin-rich additives, resistant starch, xanthan or guar gum, pectin, etc.).

Besides, hydrolytic enzymes of bacteria take a significant place in the inventive probiotic composition. It is well known that hydrolytic enzymes of normoflora bacteria are involved in the digestion of food together with human digestive enzymes. In the human large intestine, digestion is carried out primarily by bacterial enzymes.

Bacteria secrete digestive enzymes depending on the composition of the nutrient medium. In the presence of mono- and disaccharides, probiotic bacteria primarily secrete enzymes for the digestion and assimilation of these energetically beneficial compounds. After the saccharides are depleted, bacteria switch to other less energetically valuable compounds, thus releasing the corresponding hydrolytic enzymes. Synthesized enzymes are accumulated in the fermentation medium.

The material of plant origin used in the composition of hydrolysates or alkaline lysates includes a variety of simple and complex sugars (oligo- and polysaccharides). This circumstance determines the heterogeneity of bacterial digestive enzymes accumulated in the probiotic composition. This enables the use of the probiotic composition as an efficient means for reducing the glycemic index of food. As a result, the use of the probiotic composition has a positive effect on the dietary properties of the food being consumed and on the status of people who have type II diabetes.

When the probiotic composition is added to food as a functional food ingredient, apparent signs of "digestion of food in a plate" (dissolution when being stirred, richer organoleptic flavour, notable desaccharification) with enzymes accumulated in the probiotic composition are observed. Food with the ingredient "probiotic composition" is termed by the present inventors as "probiotic food".

The food being consumed usually contains a variety of mono- and disaccharides and hidden sugars (starchy compounds), which increase its glycemic index. Bacterial digestive enzymes from the inventive probiotic composition hydrolyse them.

The wider the variety of sugar-destroying enzymes accumulated in the probiotic composition, and the greater the amount of them accumulated in the probiotic composition, the faster and more effective the desaccharification and reduction of the glycemic index of consumed food would occur after the food is supplemented with the composition. Food which is treated or consumed with the composition becomes more suitable for people suffering from obesity, as well as type II diabetes and higher blood sugar levels.

In the absence of special preservatives, digestive enzymes are rapidly destroyed. However, by virtue of the technical features of the invention as described above, the probiotic composition maintains a balance of acidity, antioxidants, minerals and natural preservatives (sodium lactate and lactic acid), which prevent the rapid destruction of the available digestive enzymes and various other functional ingredients of the composition.

Besides, both serotonin precursors and serotonin per se are generated in the inventive probiotic composition by virtue of the synthetic activity of probiotic bacteria. For people suffering from gastritis and peptic ulcer diseases of the gastrointestinal tract, heartburn, high acidity, the presence of serotonin in the composition is a significant factor for the normalization of gastrointestinal functions. This enables the use of the composition, both separately and as a food ingredient, for the prevention and relief of symptoms of these gastrointestinal diseases.

### Use of the probiotic composition

In other aspects, the present invention relates to uses of the probiotic composition produced by the method according to the first aspect as described above for various purposes, non-limiting examples of which are described below. It should be noted that, based on the information about the product (probiotic composition) and the method of its production as provided above, other purposes for which the probiotic composition according to the invention may also be used, thus implementing the intended use as specified and achieving the specified technical result, may be apparent to those skilled in the art, whereas all such purposes are also deemed to be encompassed by the scope of legal protection of the claimed invention.

First of all, it should be noted that the characteristics of the product (probiotic composition) obtained by the inventive method allow its internal (as an example, oral, intranasal and rectal) and external use for health purposes, which is stipulated, in particular, by the contents of the probiotic composition and its physical form (fine suspension).

Tests of the inventive probiotic composition being used by the above-mentioned methods demonstrated the beneficial effects of the probiotic composition based on the following mechanisms of effect of the probiotic composition.

It was shown that the effect of the inventive probiotic composition in case of intranasal and oral administration (in the latter case, in the form of a mouth wash) is similar in terms of its mechanism to such drugs with probiotics, bactericidal means, enzymes, metabiotics as, for example, cold medication Nozdrin manufactured by VETOM (contents: *Bacillus amyloliquefaciens* bacteria strain VKPM B-10642 (DSM 24614), their metabolic products and a filler), AVSYSTEMS (active ingredient: vitamins, trace elements and metabolites of symbiotic bacteria *Bifidobacterium sp, Lactobacillus delbrueckii subsp. Bulgaricus, Faecalibacterium prausnitzii, Lactobacillus acidophilus,* see https://a-v-systems.com/), LiviaOne Topical Spray Probiotics (active ingredient: a mixture of probiotics on an enzyme-enriched substrate, water and a mixture of 3 herbs, see https://store.liviaglobal.com/products/topical-probiotic-spray-4oz).

The effect of the inventive probiotic composition in case of rectal use was evaluated according to the recommendations provided in references Perlmutter D., Loberg K. "The intestines and the brain. How Intestinal Bacteria Heal and Protect your Brain" 2020 ISBN 978-5-00146-890-5, Perlmutter, David (2019). The Microbiome and the Brain. CRC Press. ISBN 978-0815376729.

The effect of the inventive probiotic composition in case of external use was evaluated using the example of cosmetics with metabiotics/postbiotics, enzymes, vitamins and probiotics (such as, for example, USDA Organic Topical (Skin) Probiotic Spray by MaryRuth's https://www.maryruthorganics.com/products/skin-usda-organic-topical-probiotic-spray-vegan-non-gmo-4oz).

Due to the variability of the plant raw materials being used, broad technological possibilities are created for the production of a wide variety of probiotic food compositions with different regulatory effects on the human body. This makes it possible to account for individual differences between people and choose the optimal product which is most effective for normalizing the gastrointestinal microflora of a particular person.

External use is effective in case of:
- itching (by virtue of the complex effect of short-chain fatty acids, antioxidants and anti-inflammatory agents from the probiotic composition);
- lesions and ulcers of epithelial integuments, skin rashes (by virtue of the complex effect of bacteriocins, antioxidants, anti-inflammatory agents from the probiotic composition);
- for skin and hair care (by virtue of essential nutrients, minerals in bioavailable form, exopolysaccharides and other bioactive metabolites of microorganisms).

Rectal application is effective in case of:
- dysbacteriosis, peristaltic disorders, constipations and diarrhea;
- diseases associated with the accumulation of proinflammatory cytokines in human organs (type II diabetes mellitus, obesity, local inflammation of mucous membranes, etc.).

Intranasal use is effective in case of:
- rhinitis associated with nasal cavity microbiota disorders;
- prophylaxis of viral and bacterial nasopharyngeal infections;
- nasal breathing difficulties.

Rinsing and spraying the oral cavity is effective:
- in case of oral cavity, salivary glands and tonsils inflammation, as well as for the prophylaxis of viral and bacterial infections;
- for reducing dental plaque;
- for improving the status of the oral cavity mucous membrane and dental surfaces.

The properties and contents of the composition enable the use of the invention:
- in military and expedition conditions due to the use of fermented wild plants during their growing season, preservation of meat products of local origin;
- conditionally healthy people can diversify their diet and strengthen the immune system by using of fermented foods enriched with vitamins, natural antiseptics, antioxidants and immunomodulators;
- in places with a shortage of food, products suitable for adequate nutrition may be produced from low-nutritious and difficult-to-digest plant raw materials;
- for restoring and maintaining the functions of the gastrointestinal tract and normoflora;
- in the food industry, to reduce the cost of food production and enhance the possibilities of preservation of products, fermentation and pickling of food products of animal origin (meat, fish, seafood);
- as part of wellness and rehabilitation courses;
- for persons suffering from type II diabetes and/or obesity, to reduce the levels of postprandial sugar and pro-inflammatory cytokines in affected organs and tissues, as well as partial blockade of the hunger center in the brain using YY-peptide of bacterial origin;
- for women during pregnancy and after childbirth, to alleviate the symptoms of toxicosis and enrich the diet;
- for lactating women, to enrich their diet with essential nutrients and minerals in a bioavailable form;
- in the penitentiary system, as an affordable means of ensuring an adequate diet;
- as a functional ingredient and flavor enhancer for beverages and other food products;
- to remedy for intoxication during cancer treatment courses;
- during recovery from coronavirus infection and during the course of the disease - as a remedy for cytokine storm, restoring the microbiota and strengthening immunity, by virtue of the large amount of anti-inflammatory compounds of bacterial origin and detoxification agents of plant and bacterial origin.

The use of the inventive probiotic composition as part of food contributes to weight normalization and reduction of postprandial blood sugar levels, by virtue of partial destruction of sugars by bacterial enzymes and slowing down the transmission of monosaccharides through the intestinal wall, enhancement of nutritional value of food, which enables a reduction of the volume of food consumed in a single meal.

Aside from the above-mentioned applications, the inventive probiotic composition may also be used as animal feed and feed additives, and as an agricultural fertilizer and a plant treatment means.

### Retentate of coarse bran particles

In yet another aspect, the invention relates to a probiotic product comprising a retentate of coarse bran particles obtained after one of the fermentation steps of the method for producing the probiotic composition based on plant raw materials according to the first aspect of the present invention as described above.

In particular, the retentate of coarse bran particles is obtained when the method according to the first aspect of the present invention is implemented, particularly at the step of filtering the probiotic composition from coarse bran particles, which is performed at least once after hydrolysis or one of the fermentation steps. Filtered out coarse bran particles are used to prepare the product according to this aspect of the invention. The product, which is a retentate of coarse bran particles, may be used in wet and/or pressed form as at least one of animal feed additives, food additives for human diet, cosmetic paste or lotion, fertilizer. The retentate of coarse bran particles according to the invention is a product which is ready for administration or use, with a long shelf life in vacuum packed form or after lyophilization, which, in turn, enables further prolongation of the shelf life of the product.

## Claims

1. A method for producing a probiotic composition based on plant raw materials, the method comprising:
enriching natural honey or a material of a plant origin, which is one of cereals, beans, vegetables, fruits, green mass of edible plants, including wild plants, and their by-products(crushed grain, crushed seeds, flakes, granules, flour, juices, solid/semi-liquid/liquid/dry concentrates, pastes and cake), taken separately or in the form of blends of different compositions, at least once with a composition of trace elements,
converting the same into a liquid form of a hydrolysate with a concentration of dry matter of 0.2 to 80%,
pasteurizing,
adding a mesophilic and/or thermophilic starter culture containing strains of food microorganisms,
fermenting at an optimal temperature for the reproduction of microorganisms until a stationary growth phase is reached,
transitioning to a fermentation step at a suboptimal reduced temperature until predetermined characteristics are achieved,
filtering out coarse bran particles after hydrolysis or one of the fermentation steps.

2. The method according to claim 1, wherein the composition of trace elements is selected from a group comprising at least one of pink (Himalayan) salt, sea salt, seaweed powder, food ingredients or compositions containing a wide variety of trace elements, or any combination thereof.

3. The method according to claim 1, wherein a mesophilic and/or thermophilic starter culture is represented by at least one of the strains suitable for use in the food industry, from among the species of lacto/bifido/propionic acid bacteria of the following genera: *Aerococcus, Bifidobacterium, Camobacterium, Enterococcus, Lactobacillus, Lactococcus, Leuconostoc, Oenococcus, Pediococcus, Propionibacterium, Sporolactobacillus, Streptococcus, Tetragenococcus, Vagococcus, Weissella,* and species of other genera of lactobacteria which belong to species and strains of microorganisms that are not pathogenic to humans, either separately or in any combination with each other.

4. The method according to claim 1, further comprising adding at least one of components selected from a group comprising: minerals, polyphenols and phenolic acids separately or in a mixture, sources of omega 3 and 6, dietary fibers, herbal extracts, natural honey, molasses, natural sugars, natural thickeners, natural antioxidants and flavors in the form of aqueous solutions, powder, granules, aqueous or oil extracts, pastes, crushed plant raw materials, plant parts, crystals, or any combination thereof.

5. The method according to claim 1, wherein food alkalis and/or defoamers are added at the steps of hydrolysis and fermentation.

6. The method according to claim 1, wherein the transitioning to the liquid form of hydrolysate further comprises saccharification of the hydrolysate.

7. The method according to claim 1, wherein the transitioning to the liquid form of hydrolysate is carried out using food alkalis.

8. The method according to claim 1, wherein, at the fermentation step or after filtration, the composition is diluted with water, juice, saline solution, a solution of herbs and plants, syrups or other beverages, edible oils.

9. The method according to claim 1, wherein the predetermined characteristics for the completion of the fermentation step at the suboptimal temperature, which are selected from a group comprising:
enzyme activity level,
composition and quantitative content of vitamins,
content of monomers and/or oligomers of proteins, carbohydrates and fats,
content and composition of short-chain fatty acids, exopolysaccharides, bacteriocins, polyphenols and phenolic acids, natural antioxidants, minerals in a bioavailable form, dietary fibers,
amount of postbiotic and/or metabolic layer,
pH level,
fermentation time at a predetermined temperature,
organoleptic properties, or
any combination thereof.

10. A probiotic composition based on plant raw materials, **characterized by**:
pH level of 1.5 to 6.5,
absence of coarse bran particles,
the composition comprising:
a composition of trace elements,
natural antioxidants of plant origin,
polyphenols and phenolic acids of plant and bacterial origin,
dietary fibers,
peptides,
beta-glucans,
mono- and oligomers of carbohydrates and proteins,
polyunsaturated fatty acids,
active microorganisms,
accumulated metabolites and postbiotics of microorganisms,
minerals in a bioavailable form,
hydrolytic enzymes and detoxification enzymes,
bacteriocins,
exopolysaccharides,
B group vitamins, short-chain
fatty acids,
neurotransmitters and their precursors,
heme-containing proteins and other metalloproteins; and a
mass fraction of dry matter of 0.2 to 80 wt. %.

11. The probiotic composition according to claim 10, wherein the composition of trace elements is selected from a group comprising at least one of pink (Himalayan) salt, sea salt, seaweed powder, food ingredients or compositions containing a wide variety of trace elements, or any combination thereof.

12. Use of the probiotic composition according to claim 10 as means for health purposes for external and internal administration, wherein the internal administration is selected from a group comprising oral, intranasal and rectal administration.

13. The use according to claim 12, **characterized in that** the probiotic composition is administered with dilution by saline or aqueous solutions, solutions of herbs and other natural medicinal means.

14. Use of the probiotic composition according to claim 10 as a functional food ingredient in at least one of solid foods, pastes, beverages and ready-made sauces.

15. Use of the probiotic composition according to claim 10 as at least one of a detoxification means, an ingredient of medicinal means, a component which is effective against at least one of obesity, symptoms of type II diabetes, proinflammatory and toxicogenic glycation of biomolecules in case of higher levels of postprandial blood sugar.

16. Use of the probiotic composition according to claim 10 as a concentrate for preparation of functional foods and/or an additional source of digestive enzymes.

17. Use of the probiotic composition according to claim 10 as at least one of an animal feed additive, a human dietary supplement, cosmetic paste or lotion, fertilizer.

18. A probiotic product comprising a retentate of coarse bran particles obtained after one of the fermentation steps in the method according to any one of claims 1-9, configured to be used in a wet and/or pressed form as at least one of an animal feed additive, human dietary supplement, cosmetic paste or lotion, fertilizer.

## Amended claims

### Amended claims under Art. 19.1 PCT

1. A method for producing a probiotic composition based on plant raw materials, the method comprising:
enriching natural honey or a material of a plant origin, which is one of cereals, beans, vegetables, fruits, green mass of edible plants, including wild plants, and their by-products, taken separately or in the form of blends of different compositions, with a composition of trace elements,
converting the same into a liquid form of a hydrolysate with a concentration of dry matter of 0.2 to 80%,
pasteurizing,
adding a mesophilic and/or thermophilic starter culture containing strains of food microorganisms,
fermenting at an optimal temperature for the reproduction of microorganisms until a stationary growth phase is reached,
transitioning to a fermentation step at a suboptimal reduced temperature,
filtering out coarse bran particles after hydrolysis or one of the fermentation steps.

2. The method according to claim 1, wherein said by-products are selected from a group comprising crushed grain, crushed seeds, flakes, granules, flour, juices, solid/semi-liquid/liquid/dry concentrates, pastes and cake.

3. The method according to claim 1, wherein the composition of trace elements is selected from a group comprising at least one of pink (Himalayan) salt, sea salt, seaweed powder, food ingredients or compositions containing a wide variety of trace elements, or any combination thereof.

4. The method according to claim 1, wherein a mesophilic and/or thermophilic starter culture is represented by at least one of the strains suitable for use in the food industry, from among the species of lacto/bifido/propionic acid bacteria of the following genera: *Aerococcus, Bifidobacterium, Camobacterium, Enterococcus, Lactobacillus, Lactococcus, Leuconostoc, Oenococcus, Pediococcus, Propionibacterium, Sporolactobacillus, Streptococcus, Tetragenococcus, Vagococcus, Weissella,* either separately or in any combination with each other.

5. The method according to claim 1, further comprising adding at least one of components selected from a group comprising: minerals, polyphenols and phenolic acids separately or in a mixture, sources of omega 3 and 6, dietary fibers, herbal extracts, natural honey, molasses, natural sugars, natural thickeners, natural antioxidants and flavors in the form of aqueous solutions, powder, granules, aqueous or oil extracts, pastes, crushed plant raw materials, plant parts, crystals, or any combination thereof.

6. The method according to claim 1, wherein food alkalis and/or defoamers are added at the steps of hydrolysis and fermentation.

7. The method according to claim 1, wherein the transitioning to the liquid form of hydrolysate further comprises saccharification of the hydrolysate.

8. The method according to claim 1, wherein the transitioning to the liquid form of hydrolysate is carried out using food alkalis.

9. The method according to claim 1, wherein, at the fermentation step or after filtration, the composition is diluted with water, juice, saline solution, a solution of herbs and plants, syrups or other beverages, edible oils.

10. The method according to claim 1, wherein the fermentation step at the suboptimal temperature is completed upon achieving predetermined characteristics, which are selected from a group comprising:
enzyme activity level,
composition and quantitative content of vitamins,
content of monomers and/or oligomers of proteins, carbohydrates and fats,
content and composition of short-chain fatty acids, exopolysaccharides, bacteriocins, polyphenols and phenolic acids, natural antioxidants, minerals in a bioavailable form, dietary fibers,
amount of postbiotic and/or metabolic layer,
pH level,
fermentation time at a predetermined temperature,
organoleptic properties, or
any combination thereof.

11. A probiotic composition based on plant raw materials produced by the method of claim 1, **characterized by**:
pH level of 1.5 to 6.5,
absence of coarse bran particles,
the composition comprising:
a composition of trace elements,
natural antioxidants of plant origin,
polyphenols and phenolic acids of plant and bacterial origin,
dietary fibers,
peptides,
beta-glucans,
mono- and oligomers of carbohydrates and proteins,
polyunsaturated fatty acids,
active microorganisms,
accumulated metabolites and postbiotics of microorganisms,
minerals in a bioavailable form,
hydrolytic enzymes and detoxification enzymes,
bacteriocins,
exopolysaccharides,
B group vitamins, short-chain
fatty acids,
neurotransmitters and their precursors,
heme-containing proteins and other metalloproteins; and a
mass fraction of dry matter of 0.2 to 80 wt. %.

12. The probiotic composition according to claim11, wherein the composition of trace elements is selected from a group comprising at least one of pink (Himalayan) salt, sea salt, seaweed powder, food ingredients or compositions containing a wide variety of trace elements, or any combination thereof.

13. Use of the probiotic composition according to claim 11 as a probiotic health promoting means for external and internal administration, wherein the internal administration is selected from a group comprising oral, intranasal and rectal administration.

14. The use according to claim 13, **characterized in that** the probiotic composition is administered with dilution by saline or aqueous solutions, solutions of herbs and other natural medicinal means.

15. Use of the probiotic composition according to claim 11 as a functional food ingredient in at least one of solid foods, pastes, beverages and ready-made sauces.

16. Use of the probiotic composition according to claim 11 as means selected from a group comprising a detoxification means, an ingredient of medicinal means, a component which is effective against obesity, symptoms of type II diabetes, proinflammatory and toxicogenic glycation of biomolecules in case of higher levels of postprandial blood sugar.

17. Use of the probiotic composition according to claim 11 as a concentrate for preparation of functional foods and an additional source of digestive enzymes.

18. Use of the probiotic composition according to claim 11 as a means selected from a group comprising an animal feed additive, a human dietary supplement, cosmetic paste or lotion, fertilizer.

19. A probiotic product comprising a retentate of coarse bran particles obtained after one of the fermentation steps in the method according to any one of claims 1-10, configured to be used in a wet and/or pressed form as at least one of an animal feed additive, human dietary supplement, cosmetic paste or lotion, fertilizer.
